# EUROPÄISCHE PATENTANMELDUNG

(11) **EP 0 852 192 A1**
(43) Veröffentlichungstag der Anmeldung: **08.07.1998**
(21) Anmeldenummer: 97122429.0
(22) Anmeldetag: 18.12.1997
(51) Int. Cl.: B60R 21/20, B60R 21/26

(54) **Gassack-Modul**

(30) Priorität: 27.12.1996 DE 29622493 U
(71) Anmelder: TRW Occupant Restraint Systems GmbH & Co. KG, 73551 Alfdorf (DE)
(72) Erfinder: Berger, Jürgen, 73557 Mutlangen (DE)
(74) Vertreter: Kitzhofer, Thomas, Dipl.-Ing.

(57) **Zusammenfassung**

Ein Gassack-Modul mit einem Gassack (18), der einen Einblasmund (20) aufweist, einer im wesentlichen rohrförmigen, ein Auslaßende (14) aufweisenden Druckgasquelle (12) und einer Befestigungseinrichtung, mittels der der Gassack (18) und die Druckgasquelle (12) miteinander gekoppelt sind, ist dadurch gekennzeichnet, daß der Gassack (18) mit seinem Einblasmund (20) über das Auslaßende (14) gestülpt ist und mit der Befestigungseinrichtung in Form eines ringförmigen, die Berandung des Einblasmundes (20) umgebenden, eine radiale Kraft erzeugenden Spannelements (22) gasdicht an der Druckgasquelle (12) angeschlossen ist.

## Beschreibung

Die Erfindung betrifft ein Gassack-Modul mit einem Gassack, der einen Einblasmund aufweist, einer im wesentlichen rohrförmigen, ein Auslaßende aufweisenden Druckgasquelle und einer Befestigungseinrichtung, mittels der der Gassack und die Druckgasquelle miteinander gekoppelt sind.

Bislang werden Gassäcke gasdicht an eine Druckgasquelle gekoppelt, indem eines sich im Inneren des Gassack befindliches Rahmenteil, das die Berandung des Einblasmundes umgibt, mit Schraubverbindungen an einem Blechgehäuse befestigt wird, in dem sich die Druckgasquelle befindet. Dabei wird die Berandung des Einblasmundes zwischen dem Blechgehäuse und dem Rahmenteil eingespannt. Diese Art der lagesicheren und gasdichten Koppelung von Gassack und Druckgasquelle ist nicht nur in der Fertigung aufgrund der zahlreichen Teile aufwendig, sondern es bedarf bei der Montage auch eines hohen Zeitaufwands, um die Teile miteinander zu verbinden.

Die Erfindung schafft ein Gassack-Modul, bei dem der Gassack und die Druckgasquelle auf einfache Weise schnell miteinander verbunden werden können. Dies wird bei einem Gassack-Modul der eingangs genannten Art dadurch erreicht, daß der Gassack mit seinem Einblasmund über das Auslaßende gestülpt ist und mit der Befestigungseinrichtung in Form eines ringförmigen, die Berandung des Einblasmundes umgebendenen, eine radiale Kraft erzeugenden Spannelements gasdicht an der Druckgasquelle angeschlossen ist. Dadurch kann das bislang vorgesehene Rahmenteil ebenso wie das großvolumige Gehäuse entfallen.

Die Erfindung schafft gemäß einer weiteren Ausführungsform ein Gassack-Modul, das ein rohrförmiges Adapterteil aufweist, welches den Gassack mit der Druckgasquelle verbindet. Der Gassack wird mit seinem Einblasmund auf das Adapterteil gestülpt und mit der Befestigungseinrichtung in Form eines ringförmigen, die Berandung des Einblasmundes umgebenden, eine radiale Kraft erzeugenden Spannelements gasdicht am Adapterteil angeschlossen. Durch das Adapterteil kann die Lage der Druckgasquelle relativ zum Einblasmund variiert werden, ohne daß hierzu großvolumige zusätzliche Gehäuseteile erforderlich sind. Die Befestigung des Gassacks erfolgt lediglich über das einfach zu montierende Spannelement.

Die äußere Mantelfläche desjenigen Teiles, auf das der Einblasmund geklemmt ist, also entweder die Druckgasquelle oder das Adapterteil, weist gemäß einer bevorzugten Ausgestaltung im Bereich des Angriffs der Befestigungseinrichtung eine Ringnut auf. Durch die Nut kann die Sicherheit der Befestigung und deren Gasdichtigkeit noch erhöht werden. Ferner ist vorgesehen, daß die Querschnittsform der Ringnut der Querschnittsform des Spannelementes im wesentlichen angepaßt ist. Dadurch ist eine Art Formschluß zwischen der Befestigungseinrichtung und der Druckgasquelle oder dem Adapterteil erzielbar.

Die Spannelemente haben üblicherweise die Form einer Schlauch- oder Rohrschelle.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Ausschnitt einer ersten Ausführungsform des erfindungsgemäßen Gassack-Moduls im Bereich der Befestigung des Gassacks an der Druckgasquelle;
- Figur 2 einen Ausschnitt einer zweiten Ausführungsform des erfindungsgemäßen Gassack-Moduls, bei dem der Gassack an einem abgewinkelten Adapterteil befestigt ist;
- Figur 3 eine Schelle, mit der der Gassack an der Druckgasquelle oder an dem Adapterteil befestigt werden kann;
- Figuren 4a bis 4c Schnittansichten und eine Seitenansicht eines deformierbaren durchgehenden Ringes, mit dem der Gassack an der Druckgasquelle oder an dem Adapterteil befestigt werden kann;
- Figuren 5a bis 5c verschiedene Ansichten eines Spannelements in Form eines um mehr als 360° gebogenen federelastischen Bandmaterials zur Befestigung des Gassacks; und
- Figuren 6a und 6b eine Schnittansicht bzw. eine Seitenansicht einer Schelle mit einem ratschenförmigen Schnellverschluß zur Befestigung des Gassacks.

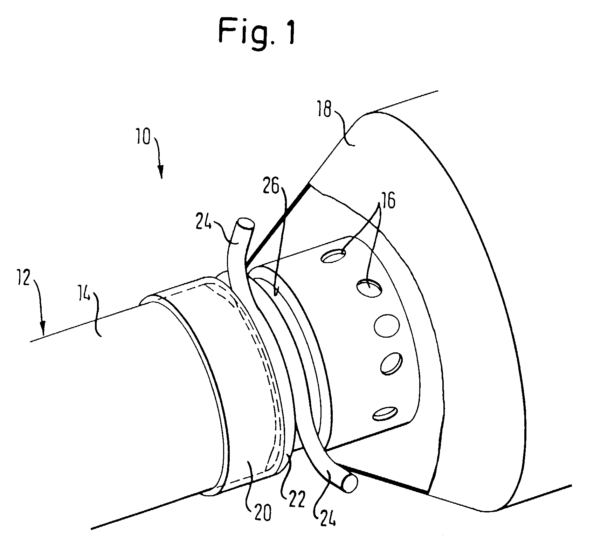

In Figur 1 ist ein Gassack-Modul 10 ausschnittsweise dargestellt. Das Gassack-Modul 10 umfaßt eine rohrförmige Druckgasquelle 12 mit einem sich flaschenhalsförmig verjüngenden Auslaßende 14. Das Auslaßende 14 weist ein stirnseitig geschlossenes freies Ende mit zahlreichen Ausströmöffnungen 16 in der Mantelfläche auf. Ein Gassack 18 ist mit seinem Einblasmund 20 auf das rohrförmige Auslaßende 14 gestülpt. Zur lagefesten und gasdichten Anbindung des Gassacks 18 am Auslaßende 14 dient eine Befestigungseinrichtung in Form eines Spannelements 22. Dieses ist ein um mehr als 360° kreisförmig gebogener Draht aus Federstahl, dessen freie Enden 24 radial nach außen abgewinkelt sind. Zur Erzeugung einer radialen Kraft auf das Auslaßende 14 ist der Innendurchmesser des kreisringförmigen Spannelements 22 kleiner als der Außendurchmesser des Auslaßendes 14 im Bereich des Angriffs des Spannelements 22, so daß das Spannelement 22 in montiertem Zustand vorgespannt am Auslaßende 14 anliegt und die Berandung des Einblasmundes 20 gasdicht gegen das Auslaßende 14 preßt.

Um die Gasdichtigkeit der sich dadurch ergebenden Verbindung zu verbessern, weist die äußere Mantelfläche des Auslaßendes 14 eine Ringnut 26 auf, in der das Spannelement 14 teilweise liegt. Die Querschnittsform der Ringnut 26 ist in ihren Abmaßen und ihrer Geometrie der Querschnittsform des Spannelements 22 unter Berücksichtigung der Dicke des Gassacks 18 im Bereich des Einblasmundes 22 angepaßt. In der in Figur 1 gezeigten Ausführungsform hat die Ringnut 26 einen U-förmigen Querschnitt. Ein Verschieben der Berandung des Gassackmundes 20 auf dem Auslaßende 14 beim Entfalten des Gassacks 18 wird durch das an den Seitenwänden der Ringnut 26 anliegende Spannelement 22 ausgeschlossen.

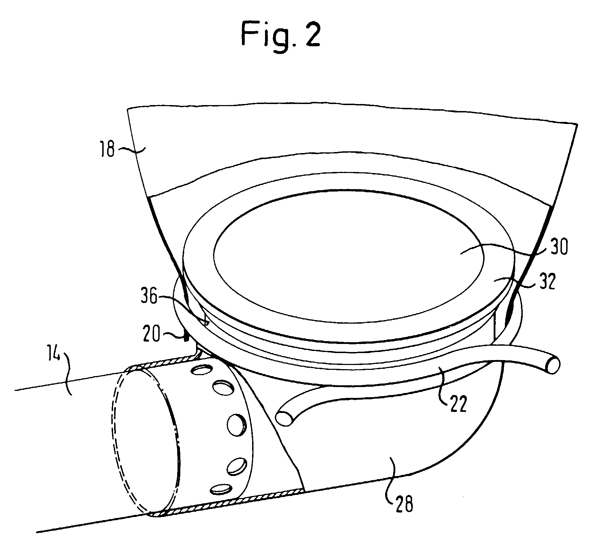

Die in Figur 2 gezeigte Ausführungsform entspricht im wesentlichen der in Figur 1 gezeigten, weshalb auf die übereinstimmenden Teile, die im übrigen mit gleichen Bezugszeichen versehen sind, nicht erneut explizit eingegangen werden muß. Im Gegensatz zu der in Figur 1 gezeigten Ausführungsform ist der Gassack 18 mit seinem Einblasmund 20 auf ein etwa 90° L-förmig abgewinkeltes Adapterteil 28 gestülpt und mit dem Spannelement 22 an diesem gasdicht und lagesicher angeschlossen. Das hohle Adapterteil 28 wiederum ist gasdicht und lagesicher auf dem Auslaßende 14 der Druckgasquelle 12 befestigt. Die Strömungsquerschnittsfläche des Adapterteils 28 vergrößert sich von dem dem Auslaßende 14 zugeordneten Ende bis zum in das Innere des Gassacks 18 ragenden Endes 30 stetig, so daß sich beim Ausströmen des Gases aus der Druckgasquelle 14 ein Diffusoreffekt ergibt. Um ein Verschieben des Spannelements 22 bei hohem Gassackinnendruck auf dem Adapterteil 28 zu verhindern, weist dessen ins Innere des Gassacks 18 ragendes Ende 30 einen radial nach außen vorstehenden Bund 32 sowie zusätzlich eine Ringnut 36 auf, welche in ihrer Funktion der anhand von Figur 1 erläuterten Ringnut 26 entspricht.

Die Montage des Gassacks 18 auf dem Auslaßende 14 oder dem Adapterteil 28 wird im folgenden erläutert. Zuerst wird das Spannelement 22 an den Enden 24 erfaßt und die Enden 24 aufeinander zu bewegt, so daß der Innendurchmesser des Spannelements 22 größer wird und das Spannelement 22 auf das Auslaßende 14 bzw. das Adapterteil 28 geschoben werden kann. Anschließend wird der Gassack 18 mit seinem Einblasmund 20 auf das Auslaßende 14 bzw. das Ende 30 gestülpt. Bei zusammengedrückten Enden 24 zur Vergrößerung des Innendurchmessers wird das Spannelement 22 über die Berandung des Einblasmundes 20 bis in den Bereich der Ringnut 26, 36 geschoben.

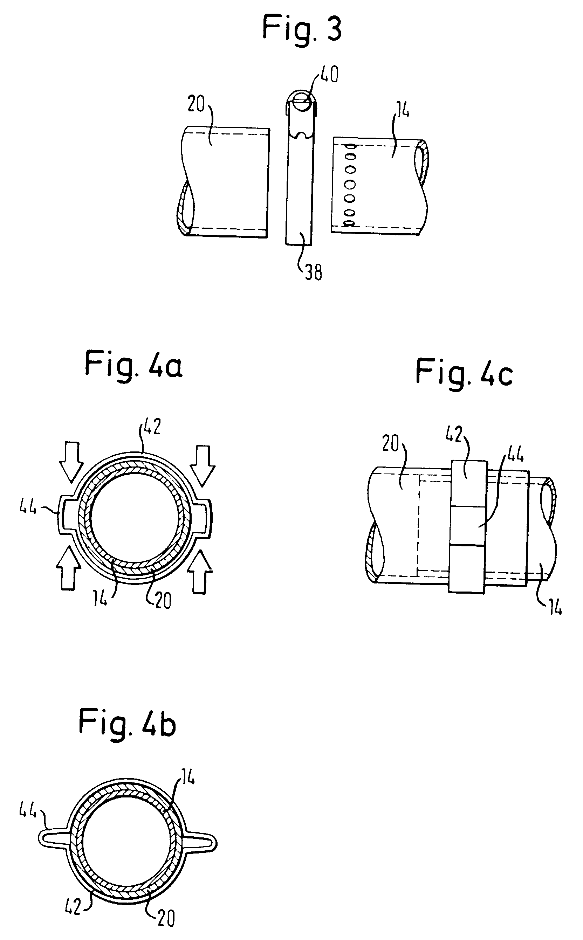

Weitere einfache, anstatt dem Spannelement 22 einsetzbare Befestigungseinrichtungen sind in den Figuren 3 bis 6 dargestellt.

Das in Figur 3 gezeigte Spannelement 38 ist als Schlauchschelle ausgeführt, welche die Berandung des Einblasmundes 20 nach Aufstülpen auf das Auslaßende 14 an dieses anpreßt. Mittels einer Schraube 40 wird der Durchmesser der Schelle variiert.

Das in Figur 4a gezeigte Spannelement 42 ist als durchgehender Ring aus einem verformbaren Bandmaterial ausgeführt. Der Ring ist mit zwei sich radial nach außen erstreckenden Ausbuchtungen 44 versehen, die sich diametral gegenüberliegen. Nach dem Aufstecken des Spannelements 42 auf den über das Auslaßende 14 gestülpten Einblasmund 20 werden die Ausbuchtungen 44 durch Aufbringen von durch Pfeile gekennzeichneten Kräften mittels einer speziellen Zange zusammengepreßt und entsprechend Figur 4b bleibend verformt. Dadurch wird der Innendurchmesser des Spannelements 44 verringert und der Einblasmund 20 an das Auslaßende 14 angeschlossen. In Figur 4c ist das Spannelement mit noch nicht bleibend verformten Ausbuchtungen 44 in Seitenansicht dargestellt.

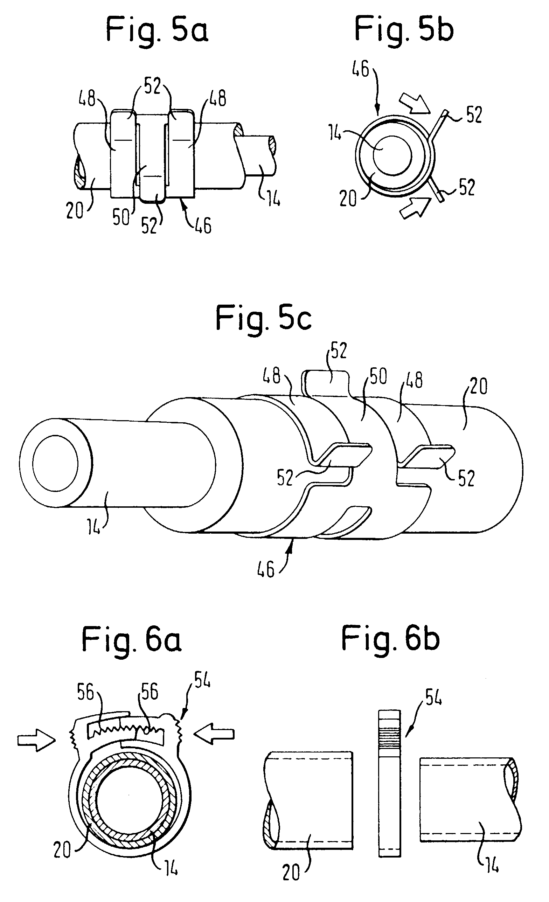

Das in den Figuren 5a bis 5c gezeigte Spannelement 46 besteht aus einem um mehr als 360° kreisringförmig gebogenem Bandmaterial aus Federstahl. Aufgrund der Biegung um mehr als 360° überschneiden sich die Enden des Bandmaterials in Umfangsrichtung. Ein erstes Ende 48 spaltet sich im Überschneidungsbereich in zwei Endenhälften 48 auf, zwischen denen das im Überschneidungsbereich schmälere, zweite Ende 50 aufgenommen ist. An den freien Enden angeformte, jeweils radial nach außen abstehende Vorsprünge 52 bilden, wie in dem in Figur 5b gezeigten Querschnitt anhand der Pfeile angedeutet, Kraftangriffsstellen. Analog zu dem in den Figuren 1 und 2 gezeigten Spannelement 22 können die Enden 48, 50 aufeinander zu bewegt werden, wodurch der Innendurchmesser des Spannelements 46 zur Montage vergrößert wird.

Das in den Figuren 6a und 6b gezeigte Spannelement 54 in Form einer einstückigen Schelle weist Enden auf, die sich in axialer Richtung (vgl. Figur 6a) gesehen U-förmig aufspalten und jeweils Verzahnungen 56 aufweisen, die ineinandergreifen. Zur Verringerung des Durchmessers des Spannelements 54 werden die Enden wie in Figur 6a anhand der Pfeile dargestellt, aufeinander zu bewegt. Der durch die Verzahnungen 56 gebildete ratschenartige Schnellverschluß erlaubt ein leichtes Aufeinanderzubewegen der Enden in einer Richtung und verhindert aufgrund der Zahnform ein Zurückbewegen der Enden nach der Montage.

Aufgrund der einfach ausgebildeten Befestigungseinrichtungen kann der Gassack 18 schnell und sicher am Auslaßende 14 oder am Adapterteil 28 montiert werden.

## Patentansprüche

1. Gassack-Modul mit
einem Gassack (18), der einen Einblasmund (20) aufweist,
einer im wesentlichen rohrförmigen, ein Auslaßende (14) aufweisenden Druckgasquelle (12) und
einer Befestigungseinrichtung, mittels der der Gassack (18) und die Druckgasquelle (12) miteinander gekoppelt sind,
dadurch gekennzeichnet, daß der Gassack (18) mit seinem Einblasmund (20) über das Auslaßende (14) gestülpt ist und mit der Befestigungseinrichtung in Form eines ringförmigen, die Berandung des Einblasmundes (20) umgebenden, eine radiale Kraft erzeugenden Spannelements (22; 38; 42; 46; 54) gasdicht an der Druckgasquelle (12) angeschlossen ist.

2. Gassack-Modul mit
einem Gassack (18), der einen Einblasmund (20) aufweist,
einer im wesentlichen rohrförmigen, ein Auslaßende (14) aufweisenden Druckgasquelle (12) und
einer Befestigungseinrichtung, mittels der der Gassack (18) und die Druckgasquelle (12) miteinander gekoppelt sind,
dadurch gekennzeichnet, daß ein rohrförmiges Adapterteil (28) den Gassack (18) mit der Druckgasquelle (12) verbindet, daß der Gassack (18) mit seinem Einblasmund (20) auf das Adapterteil (28) gestülpt ist und mit der Befestigungseinrichtung in Form eines ringförmigen, die Berandung des Einblasmundes (20) umgebenden, eine radiale Kraft erzeugenden Spannelements (22; 38; 42; 46; 54) gasdicht am Adapterteil angeschlossen ist.

3. Gassack-Modul nach Anspruch 2, dadurch gekennzeichnet, daß das Adapterteil (28) insgesamt abgewinkelt ist.

4. Gassack-Modul nach einem der vorstehenden Ansprüche, dadurch gekennzeichnet, daß die äußere Mantelfläche desjenigen Teiles, auf das die Berandung des Einblasmundes (20) geklemmt ist, im Bereich des Angriffs der Befestigungseinrichtung eine Ringnut (26; 36) aufweist.

5. Gassack-Modul nach Anspruch 4, dadurch gekennzeichnet, daß die Querschnittsform der Ringnut (26; 36) der Querschnittsform des Spannelements (22; 38; 42; 46; 54) im wesentlichen angepaßt ist.

6. Gassack-Modul nach einem der vorstehenden Ansprüche, dadurch gekennzeichnet, daß das Spannelement (38) eine Schlauchschelle ist.

7. Gassack-Modul nach einem der Ansprüche 1 bis 5, dadurch gekennzeichnet, daß das Spannelement (22) ein um mehr als 360° kreisringförmig gebogener, federelastischer Draht ist, dessen freie Enden (24) radial nach außen abgewinkelt sind.

8. Gassack-Modul nach einem der Ansprüche 1 bis 5, dadurch gekennzeichnet, daß das Spannelement (42) ein durchgehender Ring aus Bandmaterial ist, welcher wenigstens ein Paar von diametral gegenüberliegenden, sich radial nach außen erstreckenden Ausbuchtungen (44) aufweist, die zur Verringerung des Innendurchmessers des Spannelements (42) verpreßt werden können.

9. Gassack-Modul nach einem der Ansprüche 1 bis 5, dadurch gekennzeichnet, daß das Spannelement (46) ein um mehr als 360° kreisringförmig gebogenes Bandmaterial ist, dessen Enden (48, 50) sich in Umfangsrichtung überschneiden, wobei sich das erste freie Ende im Überschneidungsbereich aufspaltet und die entstehenden Endenhälften (48) das im Überschneidungsbereich schmale, zweite Ende (50) zwischen sich aufnehmen und wobei die freien Enden (48, 50) jeweils radial nach außen abstehende Vorsprünge (52) zum Aufbringen einer Umfangskraft aufweisen.

10. Gassack-Modul nach einem der Ansprüche 1 bis 5, dadurch gekennzeichnet, daß das Spannelement (54) eine einteilige Schelle mit einem ratschenartigen Schnellverschluß ist.
